# EUROPÄISCHE PATENTSCHRIFT

(11) **EP 2 098 429 B1**
(45) Veröffentlichungstag und Bekanntmachung des Hinweises auf die Patenterteilung: **02.03.2011**
(21) Anmeldenummer: 09003172.5
(22) Anmeldetag: 05.03.2009
(51) Int. Cl.: B60T 17/00, B60T 17/04, B60T 17/22

(54) **Sicherheitsablassventil für eine Druckluftversorgungsanlage für Fahrzeuge und Verfahren zum Betreiben einer solchen Druckluftversorgungsanlage**
Safety discharge valve in compressed air supply plant for vehicles and method to operate such a compressed air supply plant
Purgeur de securité pour un système d'alimentation en air comprimé pour véhicules et méthode de commande de tel système

(30) Priorität: 07.03.2008 DE 102008013169
(43) Veröffentlichungstag der Anmeldung: 09.09.2009
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- EP-A- 1 464 556
- EP-A- 1 464 557
- DE-A1-102006 023 606
- DE-A1-102006 023 632
- DE-A1-102006 023 681
- DE-A1-102006 023 728
- US-A- 5 114 315

## Beschreibung

Die Erfindung betrifft ein Sicherheitsablassventil für eine Druckluftversorgungsanlage eines Fahrzeugs, wobei im Bereich eines Ventilsitzes des Sicherheitsablassventils ein Heizelement angeordnet ist.

Die Erfindung betrifft weiterhin ein Verfahren zum Betreiben einer Druckluftversorgungsanlage für ein Fahrzeug.

Moderne Fahrzeuge mit einer Druckluftversorgungsanlage, die Druckluft für verschiedene in dem Fahrzeug angeordnete Verbraucher in aufbereiteter Form bereitstellt, verfügen üblicherweise über eine Möglichkeit bereits aufbereitete Druckluft durch die zur Aufbereitung verwendeten Filtereinrichtungen während eines Regenerationszyklus rückströmen zu lassen, um die Lebensdauer der Filtereinrichtungen zu erhöhen. Die durch die Filtereinrichtungen rückströmende Luft nimmt dabei zuvor abgeschiedene Schmutzpartikel und Feuchtigkeit auf und spült sie über ein zugehöriges Ablassventil aus der Druckluftversorgungsanlage aus.

Der Lufttrockner der Druckluftversorgungsanlage umfasst eine Ventileinrichtung, ein Ablassventil, eine angebaute Filtereinrichtung und zumindest ein Rückschlagventil, um den System- bzw. Behälterdruck gegen einen plötzlichen Druckverlust abzusichern, falls das Ablassventil geöffnet wird, um die benötigte Regenerationsluft ins Freie strömen zu lassen. Derartige Lufttrockner haben die Option, über einen zusätzlichen Ausgang eine ESS-Schalteinheit zur Energieeinsparung anzusteuern. Dieser Anschluss zweigt von der Ventileinrichtung ab.

Eine ESS-Kompressorsteuerung ist beispielsweise in der DE 3909531 gezeigt, wobei das Wirkprinzip vieler Kompressorsteuerungen ähnlich ist. Mithilfe eines pneumatischen Schaltimpulses wird ein Ventil bewegt, welches während einer Leerlaufphase eine Schadraumzuschaltung bewirkt. Die geförderte Luftmenge wird dadurch reduziert und die Verlustleistung des Kompressors nimmt ab. Typische Schaltzeiten zum Umschalten des Kompressors sind etwa 0,4 Sekunden. Diese Anordnung hat den Nachteil, dass während der Leerlaufphase noch Energie zum Drehen des Kurbeltriebs benötigt wird.

Kupplungskompressoren sind ebenfalls bekannt und müssen innerhalb von 40 Millisekunden geschaltet werden, um den Verschleiß innerhalb der Kupplung zu begrenzen. Sie benötigen also eine sehr schnelle Schaltzeit. Durch das Öffnen der Kupplung wird der Kompressor vollständig angehalten, das heißt der Energieverbrauch minimiert. Dadurch kann sich die in der Förderleitung vorhandene Luft bis auf die Umgebungstemperatur abkühlen und es findet keine Nachförderung warmer Druckluft statt.

Da die während eines Regenerationszyklus rückströmende Luft im Vergleich zu der Umgebungsluft einen erhöhten Druck aufweist, findet an dem Ablassventil eine Expansion der rückströmenden Luft statt, wobei die Luft und ihre nähere Umgebung abgekühlt wird. Je nach Umgebungstemperatur und Feuchtigkeitsgrad der rückströmenden Luft ist daher die Bildung von Kondenswasser beziehungsweise von Eiskristallen im Bereich des Ablassventils möglich. Letzteres ist in der Lage, eine Blockade des Ablassventils zu verursachen und dadurch die Funktion der Druckluftversorgungsanlage empfindlich zu stören, wobei dies insbesondere im Zusammenhang mit einem Kupplungskompressor relevant ist.

Der Erfindung liegt die Aufgabe zugrunde, ein einfach bauendes vereisungssicheres Sicherheitsablassventil bereit zu stellen, wobei gleichzeitig ein energieeffizientes Betriebsverhalten des Sicherheitsablassventils gewährleistet ist.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die Erfindung baut auf dem gattungsgemäßen Sicherheitsablassventil dadurch auf, dass das Heizelement über einen Temperaturschalter an eine Zündung des Fahrzeugs gekoppelt ist. Durch die Kopplung des Heizelements über einen Temperaturschalter an die Zündung des Fahrzeugs kann ein Einfrierschutz des Sicherheitsablassventils gewährleistet werden. Das Heizelement wird von dem Temperaturschalter unterhalb einer Einschalttemperatur T₁ aktiviert, unterhalb der das Sicherheitsablassventil festfrieren könnte. Oberhalb einer höheren Ausschalttemperatur T₂ besteht diese Gefahr nicht mehr, weshalb der Temperaturschalter das Heizelement bei Überschreiten der Temperatur T₂ wieder deaktiviert. Durch die Kopplung über die Zündung des Fahrzeugs ist weiterhin sichergestellt, dass das Heizelement nicht aktiviert wird, wenn das Fahrzeug abgestellt und die Zündung deaktiviert ist. Auf diese Weise wird die Energieeffizienz des Sicherheitsablassventils weiter erhöht.

Nützlicherweise kann dabei vorgesehen sein, dass das Sichefieitsablassventil ein 3/2-Wegeventil ist, wobei das Sicherheitsablassventil in einer einen Kompressor und einen Luftfilter verbindenden Förderleitung angeordnet ist und ein dritter Anschluss des Sicherheitsablassventils zur Entlüftung dient. Bei dieser Ausführungsform kann das 3/2-Wegeventil in seiner der Regeneration dienenden Schaltstellung entweder die gesamte Förderleitung oder nur den stromabwärts des Sicherheitsablassventils angeordneten Teil der Förderleitung über den dritten Anschluss entlüften. Das 3/2-Wegeventil ist daher eine einfache Bauform für ein Sicherheitsablassventil.

Eine Druckluftversorgungsanlage für ein Fahrzeug kann insbesondere dadurch weiterentwickelt werden, dass sie ein derartiges Sicherheitsablassventil umfasst. Es kann dabei vorteilhaft sein, dass eine Ventileinrichtung zur Ansteuerung des Sicherheitsablassventils vorgesehen ist. Die Ventileinrichtung ermöglicht die gezielte Ansteuerung des Sicherheitsablassventils, um eine Regeneration einer in der Druckluftversorgungsanlage vorhandenen Filtereinrichtung zu ermöglichen.

Es kann nützlich sein, dass ein Druckschalter vorgesehen ist, der den an dem Sicherheitsablassventil anstehenden Steuerdruck erfasst. Durch den Druckschalter ist der Schaltzustand des Sicherheitsablassventils erfassbar. Insbesondere kann durch eine einstellbare Druckempfindlichkeit des Druckschalters durch den nicht instantan erfolgenden Druckaufbau ein Zeitintervall zwischen der Ansteuerung des Sicherheitsablassventils und der Reaktion des Druckschalters erzeugt werden.

Insbesondere kann nützlich sein, dass ein von dem Druckschalter ansteuerbares Zeitschaltglied vorgesehen ist, das ein eine Kupplung schaltendes Kupplungsschaltventil ansteuert, um den Kompressor von einem Antrieb zu trennen. Durch das Zeitschaltglied lässt sich der zeitliche Abstand zwischen dem Schalten des Sicherheitsablassventils und dem Öffnen beziehungsweise Schließen der Kupplung, die den Kompressor von dem Antrieb trennt, frei wählen. Auf diese Weise lässt sich eine Vorspülphase realisieren, während der der Kompressor eventuell in der Förderleitung kondensierte Feuchtigkeit über das Sicherheitsablassventil ausspült.

Weiterhin kann vorgesehen sein, dass das Heizelement in einem Gehäuse an dem Ventilsitz des Sicherheitsablassventils angeordnet ist und dass das Gehäuse weiterhin den Druckschalter und das Zeitschaltglied aufnimmt. Mit dieser Anordnung wird eine funktionelle Separierung der zusätzlichen Bauteile gewährleistet, wodurch ein Redesign der Druckluftversorgungsanlage nur in einem geringen Umfang erforderlich ist.

Vorteilhafterweise kann vorgesehen sein, dass das Sicherheitsablassventil während normaler Betriebsbedingungen an dem Punkt niedrigster potentieller Energie in der Förderleitung angeordnet ist. Die Anordnung des Sicherheitsablassventils an dem Punkt niedrigster potentieller Energie in der Förderleitung ermöglicht die Ansammlung von in der Förderleitung kondensiertem Wasserdampf im Bereich des Sicherheitsablassventils, zum Zweck des einfacheren Ausspülens. Unabhängig von dem Ort der Kondensation in der Förderleitung fließt das kondensierte Wasser zum Punkt niedrigster potentieller Energie, das heißt zu dem Sicherheitsablassventil. Ein einfaches Gefälle der Förderleitung von dem Kompressor zu dem Sicherheitsablassventil und/oder von der Filtereinrichtung zu dem Sicherheitsablassventil ist hierfür ausreichend.

Das gattungsgemäße Verfahren wird dadurch weiterentwickelt, dass ein Ventilsitz eines Sicherheitsablassventils über ein Heizelement beheizt wird und dass das Heizelement über eine Zündung des Fahrzeugs mit Strom versorgt und von einem Temperaturschalter gesteuert wird. Auf diese Weise werden die Vorteile und Besonderheiten der erfindungsgemäßen Druckluftversorgungsanlage auch im Rahmen eines Verfahrens umgesetzt.

Dies gilt auch für die nachfolgend angegebenen besonders bevorzugten Ausführungsformen des erfindungsgemäßen Verfahrens.

Dieses wird in nützlicherweise dadurch weitergebildet, dass der Temperaturschalter zwischen seiner Einschalttemperatur T₁ und seiner Ausschalttemperatur T₂ eine Hysterese in Form einer Temperaturdifferenz ΔT durchläuft. Durch die Hysterese im Schaltverhalten des Temperaturschalters lässt sich die Anzahl der Schaltvorgänge des Heizelements begrenzen.

Vorteilhafterweise kann dabei vorgesehen sein, dass bei der Einleitung einer Regenerationsphase das Sicherheitsablassventil um ein Zeitintervall Δt₁, vor einer einen Kompressor von einem Antrieb trennenden Kupplung geöffnet wird. Durch die zeitliche Beabstandung der Öffnung des Sicherheitsablassventils und der Öffnung der Kupplung kann eventuell in der Förderleitung vorhandenes Wasser gleich am Anfang der Regenerationsphase in einer Spülphase aus der Förderleitung ausgespült werden.

Weiterhin kann vorgesehen sein, dass das Sicherheitsablassventil bei dem Beenden einer Regenerationsphase um ein Zeitintervall Δt₂ nach einer einen Kompressor von einem Antrieb trennenden Kupplung geschlossen wird. Durch die zeitliche Beabstandung des Schließens des Sicherheitsablassventils und der Kupplung kann auch ein eventuell in der Förderleitung vorhandener Rest feuchter Luft aus der Druckluftversorgungsanlage ausgespült werden.

Die Erfindung wird nun mit Bezug auf die begleitenden Zeichnungen anhand bevorzugter Ausführungsformen beispielhaft erläutert.

Es zeigen:
- Figur 1: eine schematische Darstellung eines Fahrzeugs mit einer Druckluft- versorgungsanlage;
- Figur 2: eine schematische Darstellung einer erfindungsgemäßen Druckluft- versorgungsanlage mit einem Sichefieitsablassventils;
- Figur 3: eine weitere schematische Darstellung einer erfindungsgemäßen Druckluftversorgungsanlage mit weiteren Komponenten;
- Figur 4a: ein zeitliches Verlaufsdiagramm zur Veranschaulichung der Schalt- reihenfolge von Kupplung und Sicherheitsablassventil und
- Figur 4b: einen Heizbereich des Heizelements.

In den folgenden Zeichnungen bezeichnen gleiche Bezugszeichen gleiche oder gleichartige Teile.

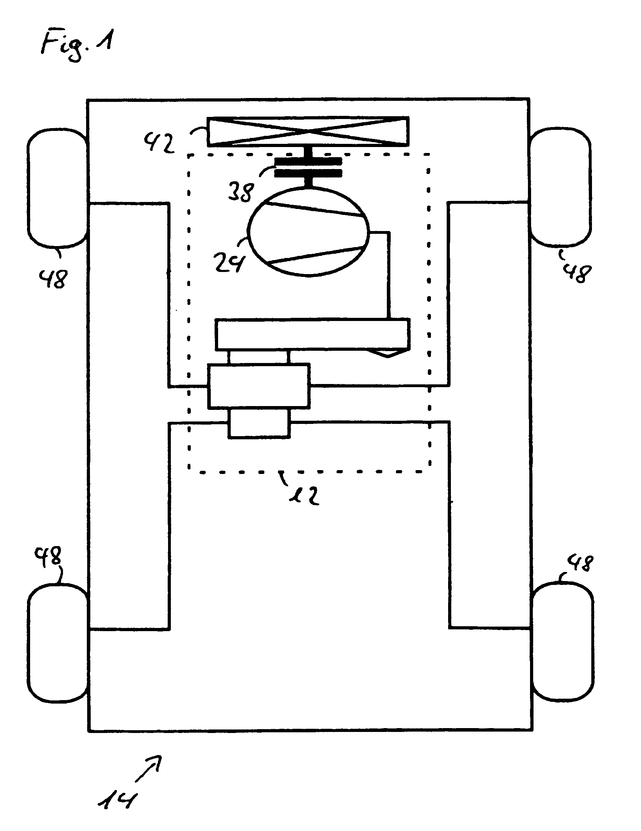

Figur 1 zeigt eine schematische Darstellung eines Fahrzeugs mit einer Druckluftversorgungsanlage. Ein dargestelltes Fahrzeug 14 umfasst einen Antrieb 42, der für den Vortrieb des Fahrzeugs 14 über Fahrzeugräder 48 verwendet wird. Weiterhin ist der Antrieb 42 über eine Kupplung 38 mit einer Druckluftversorgungsanlage 12 gekoppelt und treibt insbesondere einen Kompressor 24 an.

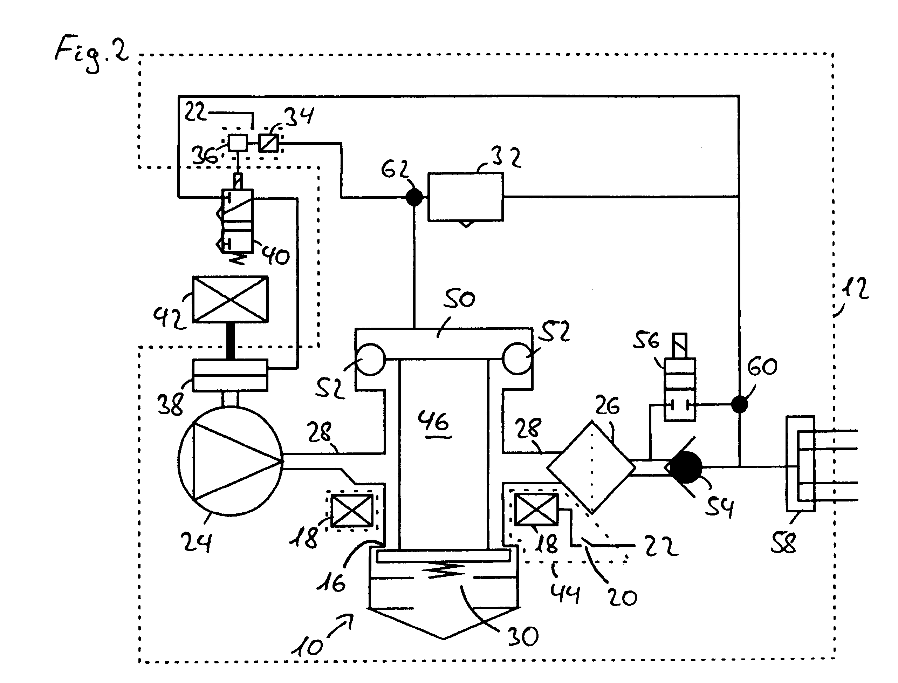

Figur 2 zeigt eine schematische Darstellung einer erfindungsgemäßen Druckluftversorgungsanlage mit einem Sicherheitsablassventil. Eine dargestellte Druckluftversorgungsanlage 12, wobei wieder ein Kompressor 24 von einem Antrieb 42 über eine Kupplung 38 angetrieben wird, umfasst weiterhin ein Sicherheitsablassventil 10, welches in einer den Kompressor 24 mit einem Luftfilter 26 verbindenden Förderleitung 28 angeordnet ist, ein dem Luftfilter 26 nachgeordnetes Rückschlagventil 54 und ein Mehrkreisschutzventil 58, wobei eine Umgehung des Rückschlagventils 54 für einen Regenerationszyklus des Luftfilters 26 über einen Schaltknoten 60 und ein Regenerationsventil 56 vorgesehen ist. Zur Steuerung des Sicherheitsablassventils 10 ist eine Ventileinrichtung 32 mit eigener Entlüftung vorgesehen, wobei an einem Verzweigungsknoten 62 ein Druckschalter 34 angeordnet ist, der den an dem Sicherheitsablassventil 10 anliegenden Steuerdruck erfasst. Der Druckschalter 34 ist mit einem Zeitschaltglied 36 gekoppelt, welches ein Kupplungsschaltventil 40 steuert, dass die Kupplung 38 öffnet und schließt. Das Kupplungsschaltventil 40 kann beispielsweise als Elektromagnetventil realisiert sein, das die Kupplung sehr schnell schalten kann und über eine elektrisch Leitung von dem Druckschalter 34 über das Zeitschaltglied 36 angesteuert wird, falls der Steuerdruck an dem Druckschalter 34 den einstellbaren Abschaltdruck erreicht hat. Durch diesen Schaltimpuls von dem Druckschalter 34 wird der Stromkreis zwischen den Batteriepolen und dem Kupplungsschaltventil 40 geschlossen. Das Sicherheitsablassventil 10 umfasst einen Anschluss 30, der als eine Entlüftung arbeitet. Bei einem Leitungsbruch des Kompressors 24 wirkt das Sicherheitsablassventil 10 als Druckbegrenzungsventil, über das der Kompressor 24 ins Freie pumpt. Zu diesem Zweck sind beispielsweise Wirkflächen eines Absperrkörpers 46 des Sicherheitsablassventils 10 im Bereich eines Ventilsitzes 16 größer als im von dem Ventilsitz 16 abgewandten Bereich, weshalb ab einem einstellbaren Höchstdruck eine den Absperrkörper 46 von seinem Ventilsitz 16 abhebende Kraft entsteht. Weiterhin ist im Bereich eines Ventilsitzes 16 des Sicherheitsablassventils 10 ein Gehäuse 44 angeordnet, welches ein Heizelement 18 und einen Temperaturschalter 20 aufnimmt.

Im Folgenden wird die Funktion der Druckluftversorgungsanlage 12 näher beschrieben. Während einer Förderphase ist die Kupplung 38 geschlossen und der Kompressor 24 fördert komprimierte Druckluft durch die Förderleitung 28 zu dem Luftfilter 26, da das Sicherheitsablassventil 10 ebenfalls geschlossen ist. Die von dem Kompressor 24 in die Förderleitung 28 eingebrachte Druckluft ist zunächst mit Feuchtigkeit, Schmutz und Ölpartikeln beladen. Das Sicherheitsablassventil 10 ist am tiefsten Punkt der Förderleitung 28 angeordnet, um eventuell auftretendes Kondensationswasser im Bereich des Sicherheitsablassventils 10 zu sammeln. Die geförderte Druckluft wird in dem Luftfilter 26 gereinigt und getrocknet, wobei ein in dem Luftfilter 26 vorhandenes Trockenmittel der Druckluft die Luftfeuchtigkeit entzieht und dabei selbst langsam mit Feuchtigkeit gesättigt wird. Stromabwärts des Luftfilters 26 gelangt die aufbereitete Druckluft über ein Rückschlagventil 54 zu einem Mehrkreisschutzventil 58, welches die Verteilung der aufbereiteten Druckluft auf einzelne nicht dargestellte Verbraucher in geeigneter Weise übernimmt. Sollte während einer Förderphase die von dem Temperaturschalter 20 im Bereich des Ventilsitzes 16 des Ablassventils 10 gemessene Temperatur unter eine Einschalttemperatur T₁ des Temperaturschalters fallen, so aktiviert der Temperaturschalter 20 das Heizelement 18, welches bei Überschreiten einer Abschalttemperatur T₂, die oberhalb der Einschalttemperatur T₁ liegt, wieder von dem Temperaturschalter 20 deaktiviert wird.

Eine Regenerationsphase ist im Wesentlichen durch eine Umkehrung der Luftströmung in dem Luftfilter 26 gekennzeichnet. Um dies zu erreichen, wird die Ventileinrichtung 32 derart geschaltet, dass ein Steuerraum 50, der von einer Dichtung 52 abgedichtet wird, belüftet wird und ein Absperrkörper 46 in dem Sicherheitsablassventil 10 von seinem Ventilsitz 16 abhebt. In diesem Zustand sind alle Anschlüsse des Sicherheitsablassventils 10 gleichzeitig geöffnet und Luft kann aus den beiden Abschnitten der Förderleitung 28 über den Anschluss 30 aus dem Sicherheitsablassventil 10 entweichen. Aufgrund des Rückschlagventils 54 kann dabei zunächst keine gereinigte Druckluft aus dem Bereich des Mehrkreisschutzventils 58 durch das Luftfilter 26 rückströmen. Es wird nur der in dem Luftfilter 26 und in der Förderleitung 28 herrschende Überdruck durch den Anschluss 30 abgebaut und durch die von dem Kompressor 24 weiterhin in die Förderleitung 28 geförderte Luft eventuell in der Förderleitung 28 kondensierte Feuchtigkeit über den Anschluss 30 ausgestoßen. Die Belüftung des Steuerraums 50 durch die Ventileinrichtung 32 ist durch den Druckschalter 34 detektierbar. Dieser kann ein Zeitschaltglied 36 beeinflussen, welches nach dem Verstreichen einer Zeitspanne Δt das Kupplungsschaltventil 40 in seinen nicht dargestellten Schaltzustand überführt, wodurch die Kupplung 38 geöffnet wird. Durch das Öffnen der Kupplung 38 wird der Kompressor 24 von dem Antrieb 42 entkoppelt, wodurch die Förderung von Druckluft in die Förderleitung 28 unterbunden wird. Gleichzeitig oder mit kurzer Zeitverzögerung wird das Regenerationsventil 56 in seinen nicht dargestellten Schaltzustand überführt, wodurch eine Umgehung des Rückschlagventils 54 für aufbereitete Druckluft aus dem Bereich des Mehrkreisschutzventils 58 möglich wird. Die aufbereitete Druckluft strömt rückwärts durch das Luftfilter 26 und nimmt dabei die dort abgelagerte Feuchtigkeit sowie Schmutz und Ölpartikel mit. Derartig beladen verlässt die Luft die Druckluftversorgungsanlage durch den Anschluss 30 des Sicherheitsablassventils 10. Beim Vertassen des Sicherheitsablassventils 10 wird die Druckluft expandiert, weshalb sich in diesem Bereich ein starker Temperaturabfall bemerkbar macht. In einem ungünstigen Fall könnte die Temperatur im Bereich des Anschlusses 30 unter die Gefriertemperatur von Wasser fallen und sich Eiskristalle im Bereich des Sicherheitsablassventiles 10 bilden. Diese Eiskristalle könnten den Absperrkörper 46 blockieren und so ein Schließen des Sicherheitsablassventils 10 verhindern. Dies würde jedoch eine Wiederaufnahme der Druckluftförderung durch die Förderleitung 28 nach Beendigung der Regenerationsphase verhindern. Daher wird bei Unterschreiten einer Einschalttemperatur T₁ von dem Temperaturschalter 20 das Heizelement 18 aktiviert und der Bereich des Anschluss 30 elektrisch beheizt, um die Bildung von Eis zu vermeiden. Bei Überschreiten einer Abschalttemperatur T₂ wird das Heizelement 18 wieder deaktiviert. Die Stromversorgung des Heizelements 18 ist über eine Zündung 22 des Fahrzeugs sichergestellt, weshalb das Heizelement 18 nicht bei einem abgestellten Fahrzeug von dem Temperaturschalter 20 aktivierbar ist. Das Zeitschaltglied 36 und der Druckschalter 34 werden ebenfalls über die Zündung 22 mit Spannung versorgt. Dies erfolgt vorteilhafterweise in Serie, um zu erreichen, dass die Kupplung 38 im stromlosen Zustand bei abgestelltem Fahrzeug drucklos ist. Parallel zu dem Druckschalter 34 kann ein weiterer von einem nicht dargestellten externen Steuergerät schaltbarer Schalter angeordnet werden, um intelligente Sonderbetriebsmodi, zum Beispiel einen Schubbetrieb oder einen Wartungsbetrieb, zu realisieren. Diese Schaltung ist als Schutz vor einer Batterieentladung bei einem abgestellten Fahrzeug gedacht.

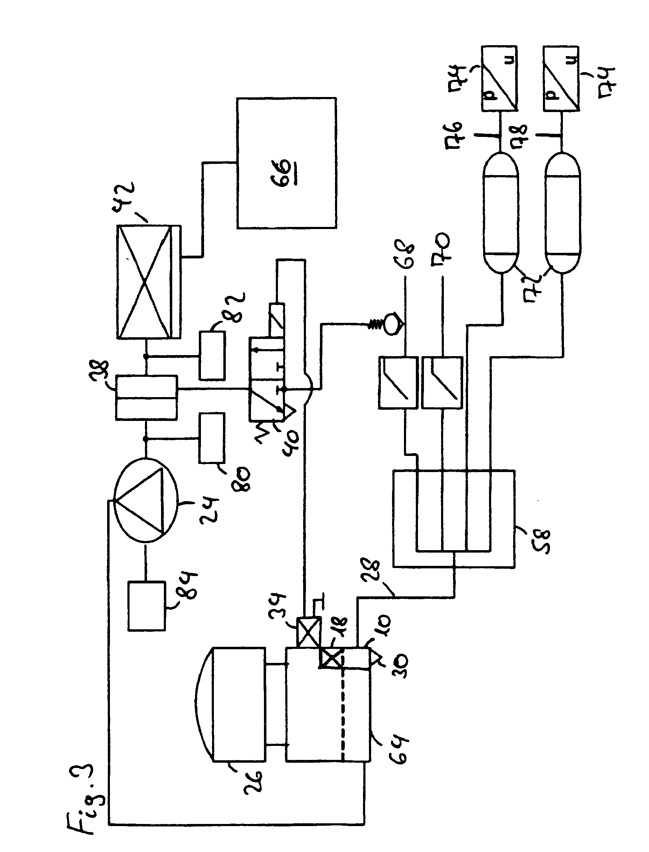

Figur 3 zeigt eine weitere schematische Darstellung einer erfindungsgemäßen Druckluftversorgungsanlage mit weiteren Komponenten. Insbesondere sind abströmseitig des Mehrkreisschutzventils 58 Anschlüsse 76, 80 für einen ersten beziehungsweise zweiten Betriebsbremskreis eingezeichnet, die jeweils von einem Drucksensor 74 überwacht und von dem Mehrkreisschutzventil 58 über Vorratsbehälter 72 gespeist werden. Weiterhin sind ein Anschluss 70 für eine Parkbremse des Fahrzeugs und ein Anschluss 68 für Nebenverbraucher vorgesehen. Im Unterschied zu Figur 2 wird bei dieser Ausführungsform das Kupplungsschaltventil 40 über ein Rückschlagventil von dem Anschluss der Nebenverbraucher 68 druckversorgt. Weiterhin ist ein Motorsteuergerät 66 für den Antrieb 42 dargestellt, welches auch Informationen bezüglich der Kupplungs- und Kompressordrehzahl über Drehzahlsensoren 80, 82 erhält. Durch die beiden Drehzahlsensoren wird gleichzeitig eine Kupplungsschlupfüberwachung realisiert. Zusätzlich ist ein Temperatursensor 84 vorgesehen, der die Kompressortemperatur erfasst. Das Sicherheitsablassventil 10 mit seinem der Entlüftung dienenden Anschluss 30 ist in einen Lufttrockner 64 integriert, an dem auch das Luftfilter 26 angebaut ist. Die Regenerationssteuerung ist idealerweise ebenfalls im Lufttrockner 64 integriert und kann pneumatischmechanisch oder elektrisch ausgeführt werden.

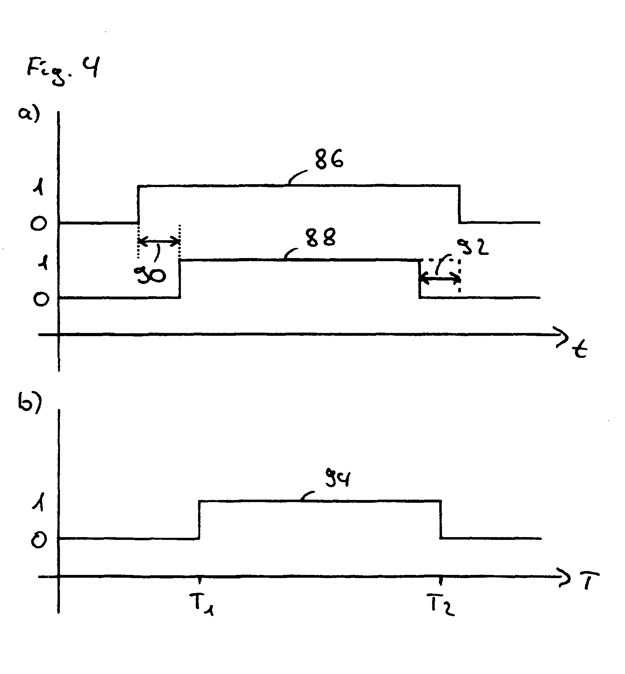

Figur 4a zeigt ein zeitliches Verlaufsdiagramm zur Veranschaulichung der Schattreihenfolge von Kupplung und Sicherheitsablassventil. Aufgetragen ist auf der X-Achse die Zeit während auf der Y-Achse jeweils zwei Zustände für das Sicherheitsauslassventil und die Kupplung in Form von 0 und 1 aufgetragen sind. Der Zustand 0 entspricht dabei einem geschlossenen Zustand während der Zustand 1 einem geöffneten Zustand entspricht. Eine Kurve 86 zeigt den zeitlichen Verlauf des Status des Sicherheitsablassventils und eine Kurve 88 zeigt den zeitlichen Verlauf des Status der Kupplung. Zunächst wird das Sicherheitsablassventil geöffnet, das heißt sein Status wechselt von 0 auf 1, während die Kupplung noch für eine Spülphase Δt₁ 90 geschlossen bleibt. Die Länge der Spülphase kann über das Zeitschattglied beziehungsweise die Druckempfindlichkeit des Druckschalters im Vergleich zum zur Betätigung des Sicherheitsablassventils notwendigen Steuerdruck eingestellt werden. Insbesondere könnte die Spülphase Δt₁ auch 0 sein. Anschließend wird die Kupplung geöffnet, das heißt vom Zustand 0 in den Zustand 1 überführt. Zum Beenden der Regenerationsphase wird zunächst wieder die Kupplung geschlossen, das heißt vom Zustand 1 in den Zustand 0 überführt und nach dem Verstreichen einer Nachspülphase Δt₂ 92, die insbesondere auch 0 sein kein, das Sicherheitsablassventil ebenfalls geschlossen. Eine Nachspülphase Δt₂ 92 ist in einfacher Weise durch unterschiedliche Schaltdrücke für den Druckschalter und das Sicherheitsablassventil realisierbar.

Figur 4b zeigt den Heizbereich des Heizelements. Ein dargstellter Status 94 des Heizelements ist auf der Y-Achse gegen die Temperatur T auf der X-Achse aufgetragen. Um eine Verringerung der Schaltzahlen des Heizelements zu erreichen wird das Heizelement bei einer Einschalttemperatur T₁ eingeschaltet und bei einer Ausschalttemperatur T₂ ausgeschaltet. Daher durchläuft das Heizelement eine Hysterese. Der Status 0 entspricht dabei einem deaktivierten und der Status 1 einem aktivierten Heizelement.

### Bezugszeichenliste

- 10: Sicherheitsablassventil
- 12: Druckluftversorgungsanlage
- 14: Fahrzeug
- 16: Ventilsitz
- 18: Heizelement
- 20: Temperaturschalter
- 22: Zündung
- 24: Kompressor
- 26: Luftfilter
- 28: Förderleitung
- 30: Anschluss
- 32: Ventileinrichtung
- 34: Druckschalter
- 36: Zeitschaltglied
- 38: Kupplung
- 40: Kupplungsschaltventil
- 42: Antrieb
- 44: Gehäuse
- 46: Absperrkörper
- 48: Fahrzeugrad
- 50: Steuerraum
- 52: Dichtung
- 54: Rückschlagventil
- 56: Regenerationsventil
- 58: Mehrkreisschutzventil
- 60: Schaltknoten
- 62: Verzweigungsknoten
- 64: Lufttrockner
- 66: Motorsteuergerät
- 68: Anschluss Nebenverbraucher
- 70: Anschluss Parkbremse
- 72: Vorratsbehälter
- 74: Drucksensor
- 76: Anschluss Betriebsbremse
- 78: Anschluss Betriebsbremse
- 80: Drehzahlsensor
- 82: Drehzahlsensor
- 84: Temperatussensor
- 86: Status Sicherheitsauslassventil
- 88: Status Kupplung
- 90: Spülphase Δt₁
- 92: Nachspülphase Δt₂
- 94: Status Heizelement

## Patentansprüche

1. Sicherheitsablassventil (10) für eine Druckluftversorgungsanlage (12) eines Fahrzeugs (14) **dadurch gekennzeichnet dass** im Bereich eines Ventilsitzes (16) des Sicherheitsablassventils (10) ein Heizelement (18) angeordnet ist, und dass das Heizelement (18) über einen Temperaturschalter (20) an eine Zündung (22) des Fahrzeugs (14) gekoppelt ist.

2. Sicherheitsablassventil (10) nach Anspruch 1, **dadurch gekennzeichnet, dass** das Sicherheitsablassventil (10) ein 3/2-Wegeventil ist,
- wobei das Sicherheitsablassventil (10) in einer einen Kompressor (24) und einen Luftfilter (26) verbindenden Förderleitung (28) angeordnet ist und
- ein dritter Anschluss (30) des Sicherheitsablassventils (10) zur Entlüftung dient.

3. Druckluftversorgungsantage (12) für ein Fahrzeug (14) mit einem Sicherheitsablassventil (10) nach einem der vorhergehenden Ansprüche.

4. Druckluftversorgungsanlage (12) nach Anspruch 3, **dadurch gekennzeichnet, dass** eine Ventileinrichtung (32) zur Ansteuerung des Sicherheitsablassventils (10) vorgesehen ist.

5. Druckluftversorgungsanlage (12) nach Anspruch 4, **dadurch gekennzeichnet, dass** ein Druckschalter (34) vorgesehen ist, der den an dem Sicherheitsablassventil (10) anstehenden Steuerdruck erfasst.

6. Druckluftversorgungsanlage (12) nach Anspruch 5, **dadurch gekennzeichnet, dass** ein von dem Druckschalter (34) ansteuerbares Zeitschaltglied (36) vorgesehen ist, das ein eine Kupplung (38) schaltendes Kupplungsschaltventil (40) ansteuert, um den Kompressor (24) von einem Antrieb (42) zu trennen.

7. Druckluftversorgungsanlage (12) nach Anspruch 6, **dadurch gekennzeichnet,**
- **dass** das Heizelement (18) in einem Gehäuse (44) an dem Ventilsitz (16) des Sicherheitsablassventils (10) angeordnet ist und
- **dass** das Gehäuse (44) weiterhin den Druckschalter (34) und das Zeitschaltglied (36) aufnimmt.

8. Druckluftversorgungsanlage (12) nach einem der Ansprüche 3 bis 7, **dadurch gekennzeichnet, dass** das Sicherheitsablassventil (10) während normaler Betriebsbedingungen an dem Punkt niedrigster potentieller Energie in der Förderleitung (28) angeordnet ist.

9. Verfahren zum Betreiben einer Druckluftversorgungsanlage (12) für ein Fahrzeug (14), **dadurch gekennzelchnet,**
- **dass** ein Ventilsitz (16) eines Sicherheitsablassventils (10) über ein Heizelement (18) beheizt wird und
- dass das Heizelement (18) über eine Zündung (22) des Fahrzeugs (14) mit Strom versorgt und von einem Temperaturschalter (20) gesteuert wird.

10. Verfahren nach Anspruch 9, **dadurch gekennzeichnet, dass** der Temperaturschalter (20) zwischen seiner Einschalttemperatur T₁ und seiner Ausschalttemperatur T₂ eine Hysterese in Form einer Temperaturdifferenz ΔT durchläuft.

11. Verfahren nach Anspruch 9 oder 10, **dadurch gekennzeichnet, dass** bei der Einleitung einer Regenerationsphase das Sicherheitsablassventil (10) um ein Zeitintervall Δt₁ vor einer einen Kompressor (24) von einem Antrieb (42) trennenden Kupplung (38) geöffnet wird.

12. Verfahren nach einem der Ansprüche 9 bis 11, **dadurch gekennzeichnet, dass** das Sicherheitsablassventil (10) bei dem Beenden einer Regenerationsphase um ein Zeitintervall Δt₂ nach einer einen Kompressor (24) von einem Antrieb (42) trennenden Kupplung (38) geschlossen wird.

## Claims

1. Safety discharge valve (10) for a compressed air supply system (12) of a vehicle, **characterised in that** a heating element (18) is provided in the region of a valve seat (16) of the safety discharge valve (10) and **in that** the heating element (18) is coupled to an ignition system (22) of the vehicle (14) via a temperature switch (20).

2. Safety discharge valve (10) according to claim 1, **characterised in that** the safety discharge valve (10) is a 3/2-way valve,
- wherein the safety discharge valve (10) is located in a delivery line (28) connecting a compressor (24) and an air filter (26) and
- wherein a third port (30) of the safety discharge valve (10) is used for venting.

3. Compressed air supply system (12) for a vehicle (14), comprising a safety discharge valve (10) according to any of the preceding claims.

4. Compressed air supply system (12) according to claim 3, **characterised in that** a valve device (32) is provided for selecting the safety discharge valve (10).

5. Compressed air supply system (12) according to claim 4, **characterised in that** a pressure switch (34) is provided for detecting the control pressure applied to the safety discharge valve (10).

6. Compressed air supply system (12) according to claim 5, **characterised in that** a timing element (36) selectable by the pressure switch (34) is provided for selecting a clutch switching valve (40) switching a clutch (38) in order to disconnect the compressor (24) from a drive (42).

7. Compressed air supply system (12) according to claim 6, **characterised in that**
- the heating element (18) is located in a housing (44) on the valve seat of the safety discharge valve (10) and
- the housing (44) further accommodates the pressure switch (34) and the timer element (36).

8. Compressed air supply system (12) according to any of claims 3 to 7, **characterised in that** the safety discharge valve (10) is located at the point of the lowest potential energy in the delivery line (28) in normal operating conditions.

9. Method for the operation of a compressed air supply system (12) for a vehicle (14), **characterised in that**
- a valve seat (16) of a safety discharge valve (10) is heated by a heating element (18) and
- the heating element (18) is supplied with power via an ignition system (22) of the vehicle (14) and controlled by a temperature switch (20).

10. Method according to claim 9, **characterised in that** the temperature switch (20) passes through a hysteresis in the form of a temperature difference ΔT between its switch-on temperature T₁ and its switch-off temperature T₂.

11. Method according to claim 9 or 10, **characterised in that** the safety discharge valve (10) is, on initiation of a regeneration phase, opened before a clutch (38) disconnecting a compressor (24) from a drive (42) by a time interval ΔT₁.

12. Method according to any of claims 9 to 11, **characterised in that** the safety discharge valve (10) is, on completion of a regeneration phase, closed before a clutch (38) disconnecting a compressor (24) from a drive (42) by a time interval ΔT₂.

## Revendications

1. Purgeur (10) de sécurité pour une installation (12) d'alimentation en air comprimé d'un véhicule (14), **caractérisé en ce que** dans la zone d'un siège (16) du purgeur (10) de sécurité est monté un élément (18) de chauffage et **en ce que** l'élément (18) de chauffage est couplé à un allumage (22) du véhicule (14) par un interrupteur (20) en fonction de la température.

2. Purgeur (10) de sécurité suivant la revendication 1, **caractérisé en ce que** le purgeur (10) de sécurité est une vanne 3/2 voies,
- dans lequel le purgeur (10) de sécurité est monté dans un conduit (28) de transport mettant en communication un compresseur (24) et un filtre (26) à air,
- un troisième raccord (30) du purgeur (10) de sécurité sert à la purge.

3. Installation (12) d'alimentation en air comprimé d'un véhicule (14) comprenant un purgeur (10) de sécurité suivant l'une des revendications précédentes.

4. Installation (12) d'alimentation en air comprimé suivant la revendication 3, **caractérisée en ce qu'**un dispositif (32) de vanne est prévu pour commander le purgeur (10) de sécurité.

5. Installation (12) d'alimentation en air comprimé suivant la revendication 4, **caractérisée en ce qu'**il est prévu un interrupteur (34) en fonction de la pression, qui relève la pression de commande appliquée au purgeur (10) de sécurité.

6. Installation (12) d'alimentation en air comprimé suivant la revendication 5, **caractérisée en ce qu'**il est prévu un élément (36) de commutation temporisée, qui peut être commandé par l'interrupteur (34) en fonction de la pression et qui commande un couplage d'une vanne (40) de commutation de couplage branchant un couplage (38) pour séparer le compresseur (24) d'un entraînement (42).

7. Installation (12) d'alimentation en air comprimé suivant la revendication 6, **caractérisée**
- entre l'élément (18) de chauffage est monté dans une enveloppe (14) sur le siège (16) du purgeur (10) de sécurité et
- en ce que l'enveloppe (14) reçoit en outre l'interrupteur (34) en fonction de la pression et l'élément (36) de commutation temporisée.

8. Installation (12) d'alimentation en air comprimé suivant l'une des revendications 3 à 7, **caractérisée en ce que** le purgeur (10) de sécurité est monté pendant des conditions de fonctionnement normales au point d'énergie potentielle la plus basse dans le conduit (28) de transport.

9. Procédé pour faire fonctionner l'installation (12) d'alimentation en air comprimé d'un véhicule (14) **caractérisé,**
- **en ce que** l'on chauffe un siège (16) d' un purgeur (10) de sécurité par un élément (18) de chauffage, et
- **en ce que** l'on alimente en un courant électrique l'élément (18) de chauffage par un allumage (22) du véhicule (14) et on le commande par un interrupteur (20) en fonction de la température.

10. Procédé suivant la revendication 9, **caractérisé en ce que** l'interrupteur (20) en fonction de la température parcourt entre sa température T₁ de mise en circuit et sa température T₂ de mise hors circuit, une hystérésis sous la forme d'une différence ΔT de température.

11. Procédé suivant la revendication 9 ou 10, **caractérisé en ce que**, lors du lancement d'une phase de régénération, le purgeur (10) de sécurité est ouvert pendant un intervalle ΔT₁ de temps avant un couplage (38) séparant un compresseur (24) d' un entraînement (42).

12. Procédé suivant l'une des revendications 9 à 11, **caractérisé en ce que** le purgeur (10) de sécurité est fermé à la fin d'une phase de régénération pendant un intervalle ΔT₂ de temps après un couplage (38) séparant un compresseur (24) d'un entraînement (42).
